# EUROPEAN PATENT APPLICATION

(11) **EP 4 538 682 A1**
(43) Date of publication of application: **16.04.2025**
(21) Application number: 23819908.7
(22) Date of filing: 09.06.2023
(51) Int. Cl.: G01N 21/63

(54) **PLASMA MEASUREMENT DEVICE**

(30) Priority: 10.06.2022 JP 2022094520
(71) Applicant: National University Corporation Hokkaido University, Hokkaido 060-0808 (JP)
(72) Inventor: TOMITA, Kentaro, Sapporo-shi, Hokkaido 060-0808 (JP)
(74) Representative: HGF
(86) International application number: PCT/JP2023/021530
(87) International publication number: WO 2023/238928

(57) **Abstract**

The present disclosure is directed to a plasma measurement device comprising: a laser light source (20) configured to apply laser light (LA) to plasma (PL); and a spectrum measurement unit (30) configured to receive scattered light (LP) from the plasma (PL) and measure a wavelength spectrum of the scattered light (LP); and an arithmetic unit (40) configured to calculate an electron temperature and an electron density of the plasma (PL), based on the measured wavelength spectrum, wherein the spectrum measurement unit (30) includes a spectroscope having an incidence slit (S1), the incidence slit including: two blades (31, 32) movable in X-direction in an XY-plane perpendicular to a traveling direction of the scattered light (LP); and at least one blade (33) movable in Y-direction perpendicular to X-direction, edges of at least three of the blades (31-33) forming a slit shape, thereby relaxing the structural constraints for plasma measurement and performing measurement with higher accuracy.

## Description

### TECHNICAL FIELD

The present invention relates to a plasma measurement device that measures an electron temperature and an electron density of plasma.

### BACKGROUND ART

As a method for performing measurement of an electron density nₑ and an electron temperature Tₑ, which are basic physical quantities of plasma, with temporal and spatial resolutions in a non-contact manner, there is the laser Thomson scattering (LTS) method (for example, see a document (K. Muraoka and A Kono: J. Phys. D: Appl. Phys. 44 043001 (2011))).

In the LTS method, free electrons in plasma are forcibly vibrated by laser light, and scattered light which is a secondary electromagnetic wave emitted from the free electrons is analyzed using spectroscope. Such a "scattering" measurement in which observation is performed along a direction different from an optical axis of the laser light; therefore, can obtain local information in which time resolution of several ns (nanoseconds) can be easily achieved. The scattered light reflects thermal velocities of the electrons with a Doppler shift, and the electron temperature Tₑ can be determined based on a spectral distribution, likewise in Rayleigh scattering from neutral particles. Since the thermal fluctuation component of the electrons can be detected, intensity of the scattered light and the electron density nₑ are proportional to each other, and the nₑ can be obtained as an absolute value.

When performing the LTS method, since the scattering cross-sectional area of free electrons is low, firstly it is necessary to apply condensed high-intensity pulsed laser light (power > 10¹¹ W/cm²) to plasma. Secondly there is a need for a mechanism for reducing stray light (part of laser light irregularly reflected by a plasma electrode, a window material, or the like) as much as possible and for separating off the stray light from weak LTS light.

Regarding a scattered light angle, in order to obtain high spatial resolution, a light receiving window is often provided in a direction close to 90° with respect to an incident direction of the laser light. In some cases, there may be provided with an element (aperture) for restricting an optical path used for inputting and outputting laser so that light reflected by the surface of windows does not enter a spectroscope through a light receiving lens. For the purpose of suppressing reflection on a material of the window, an incident window and an exit window each having a Brewster angle may be adopted in some cases.

On the other hand, most of actual plasma devices fail to have a structure suitable for the LTS measurement. For example, plasma having a high electron density (nₑ > 10²³ m⁻³) and a high electron temperature (Tₑ > 20 eV) may be sometimes used as a light source of a soft X-ray or an extreme ultraviolet (EUV) region. As a plasma generation method, there are mainly a method using a laser, a method using pinch discharge by a pulse current, and a method using both of them.

A structure for the LTS measurement requires (i) a window to allow measuring laser light to enter, (ii) a window for receiving Thomson scattered light, and (iii) a window for ejecting the measuring laser light, respectively. Here, as the windows (i) and (ii), in many cases, it is possible to use windows that have been already installed for the purpose of observing a plasma state, but the window of item (iii) above is not usually prepared in some cases. In the latter cases, it is conceived to modify the plasma device so that the LTS measurement can be applied, but there is a possibility that the essential plasma characteristics is changed, thereby making it impossible to obtain the data originally desired to be obtained. Therefore, in order to expand an applicable range of the LTS measurement, it is necessary to relax structural constraints required for the device.

### PRIOR ART

[Patent Document 1] JP 2020-122904 A
[Non-patent Document 1] Kentaro Tomita, "Measurement and Control of EUV Light Source Plasma by Laser Thomson Scattering", Applied Physics, p. 260-264, 2020, Vol. 89, No. 5
[Non-patent Document 2] K. Tomita et al., Scientific Reports 7 12328 (2017)
[Non-patent Document 3] Y. Sato, K. Tomita et al., Jpn. J. Appl. Phys., 56, 036201 (2017)
[Non-patent Document 4] Y. Pan, K. Tomita et al., Japanese Journal of Applied Physics 60, SAAB03 (2021)

### SUMMARY OF THE INVENTION

An object of the present invention is to provide a plasma measurement device capable of relaxing structural constraints for plasma measurement and, at the same time, performing plasma measurement with higher accuracy.

A plasma measurement device according to an aspect of the present invention includes:
a laser light source configured to apply laser light to plasma; and
a spectrum measurement unit configured to receive scattered light from the plasma and measure a wavelength spectrum of the scattered light; and
an arithmetic unit configured to calculate an electron temperature and an electron density of the plasma, based on the measured wavelength spectrum,
wherein the spectrum measurement unit includes a spectroscope having an incidence slit,
the incidence slit including: two blades movable in a first direction in a plane perpendicular to a traveling direction of the scattered light; and at least one blade movable in a second direction perpendicular to the first direction, edges of at least three of the blades forming a slit shape.

The present invention makes it possible to perform measurement with higher accuracy while relaxing the structural constraints of plasma measurement.

### BRIEF DESCRIPTION OF THE DRAWINGS

Fig. 1 is a configuration diagram illustrating an example of a plasma measurement device according to the present invention.
Fig. 2 is a configuration diagram illustrating another example of the plasma measurement device according to the present invention.
Fig. 3 is a configuration diagram illustrating an example of a spectrum measurement unit.
Fig. 4 is a graph showing an example of a wavelength spectrum signal of a photodetector.
Fig. 5 shows a partially enlarged view of Fig. 2.
Fig. 6 is a layout diagram illustrating an example of an incidence slit of a spectroscope.
Fig. 7A is a front view illustrating a specific example of a slit, and Fig. 7B is a side view of the slit.
Fig. 8 is a graph showing an example of a wavelength spectrum of plasma scattered light.
Fig. 9 is a graph showing results of actually measuring influence of noise scattered light in the device of Fig. 2.
Fig. 10 is a perspective view illustrating an example of a layout for LTS measurement.
Figs. 11A to 11D each show a shadow graph of an Sn target. Fig. 11A shows a state before application of laser light, Fig. 11B shows a state with a delay time of Δt=1.3 µs, Fig. 11C shows a state with a delay time of Δt=2.0 µs, and Fig. 11D shows a state with a delay time of Δt=2.5 µs. Figs. 11E to 11G show EUV emission distributions.
Fig. 12A shows an EUV emission distribution corresponding to Fig. 11E. Fig. 12B shows distributions of an electron density nₑ (upper graph) and an electron temperature Tₑ (lower graph) obtained by LTS measurement. Fig. 12C shows an emissivity distribution calculated based on the electron density ne and the electron temperature Te in Fig. 12B. Fig. 12D is a graph obtained by reconstructing the graph of Fig. 12C. Fig. 12E is a graph showing a state of EUV emission.

### DETAILED DESCRIPTION

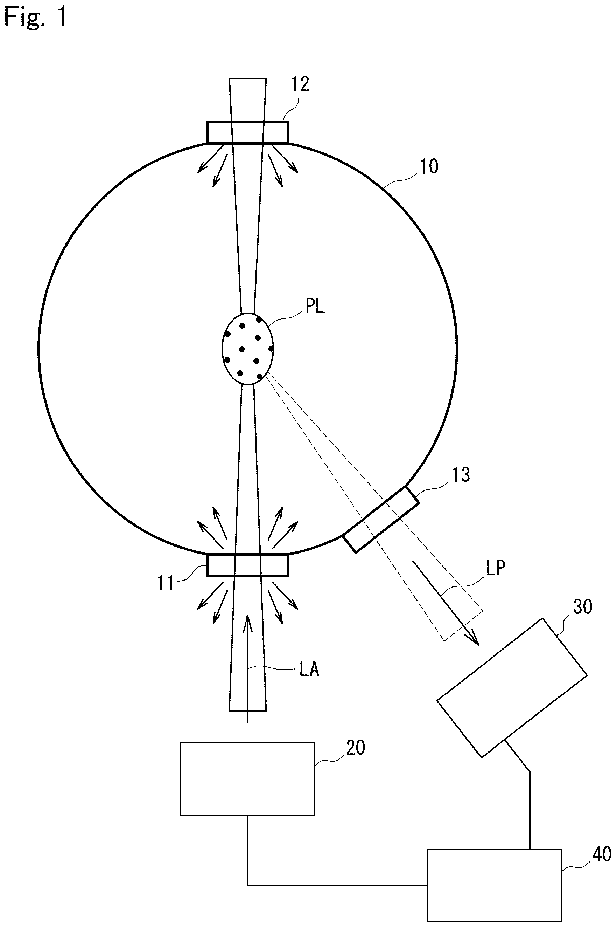

Fig. 1 is a configuration diagram illustrating an example of a plasma measurement device according to the present invention. The plasma measurement device includes a vacuum chamber 10, a laser light source 20, a spectrum measurement unit 30, an arithmetic unit 40, and the like.

The vacuum chamber 10 has a function of containing plasma PL therein, and is maintained at a vacuum degree of 10 Torr or less, for example. The plasma PL can be generated by (1) a method of applying pulsed laser light to a target to heat, (2) a method of heating a target by current drive using pulse discharge, or the like.

The laser light source 20 has a function of generating laser light LA for measurement toward the plasma PL and generates, for example, a second harmonic (532 nm) of a YAG laser.

The spectrum measurement unit 30 has a function of receiving plasma scattered light LP generated by the plasma PL and measuring a wavelength spectrum of the plasma scattered light LP.

The arithmetic unit 40 is configured with, for example, a computer and is communicably connected to the laser light source 20, the spectrum measurement unit 30, and the like. The arithmetic unit 40 calculates an electron temperature and an electron density of the plasma PL on the basis of the wavelength spectrum measured by the spectrum measurement unit 30.

A wall of the vacuum chamber 10 is provided with a plurality of windows 11 to 13 formed of a transparent material. In one example, the window 11 can be used to introduce the laser light LA for measurement into the vacuum chamber 10. The window 12 can be used to eject the laser light having passed through the plasma PL, to the outside of the vacuum chamber 10. The window 13 can be used to introduce the plasma scattered light LP coming from the plasma PL into the spectrum measurement unit 30. At the time when the laser light LA passes through the windows 11 and 12, noise scattered light is generated due to surface roughness, dirt, and the like of the windows 11 and 12.

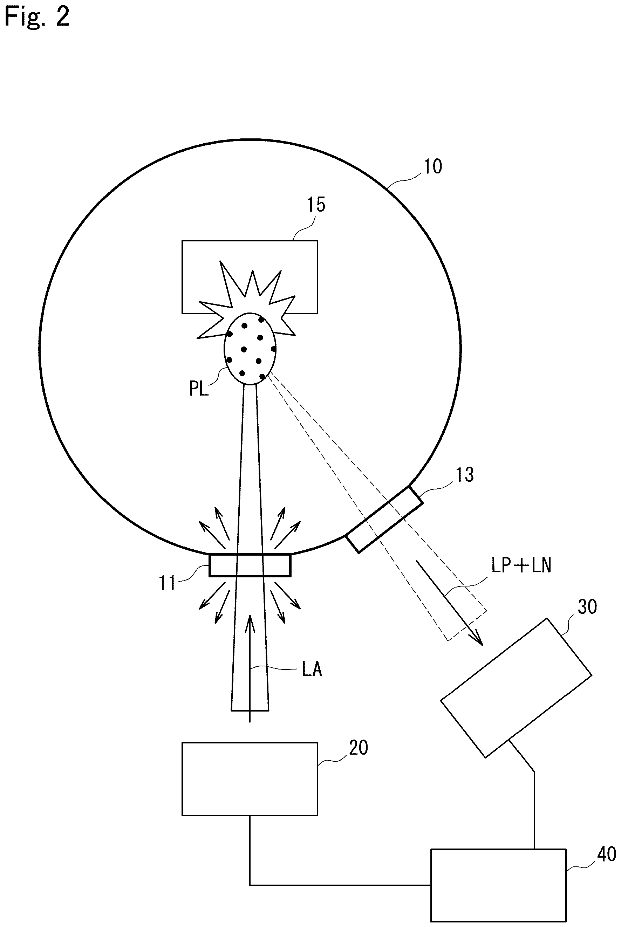

Fig. 2 is a configuration diagram illustrating another example of the plasma measurement device according to the present invention. The plasma measurement device has a configuration similar to that in Fig. 1 and includes a vacuum chamber 10, a laser light source 20, a spectrum measurement unit 30, an arithmetic unit 40, and the like.

A wall of the vacuum chamber 10 is provided with a plurality of windows 11 and 13 formed of a transparent material. In one example, the window 11 can be used to introduce the laser light LA for measurement into the vacuum chamber 10. The window 13 can be used to introduce the plasma scattered light LP coming from the plasma PL into the spectrum measurement unit 30. On the other hand, the window 12 illustrated in Fig. 1 is not included.

Behind the plasma PL, there is provided an object 15 (for example, an electrode holder). The laser light having passed through the plasma PL collides with the object 15. At that time, a large amount of noise scattered light is generated from the object 15 toward the surroundings.

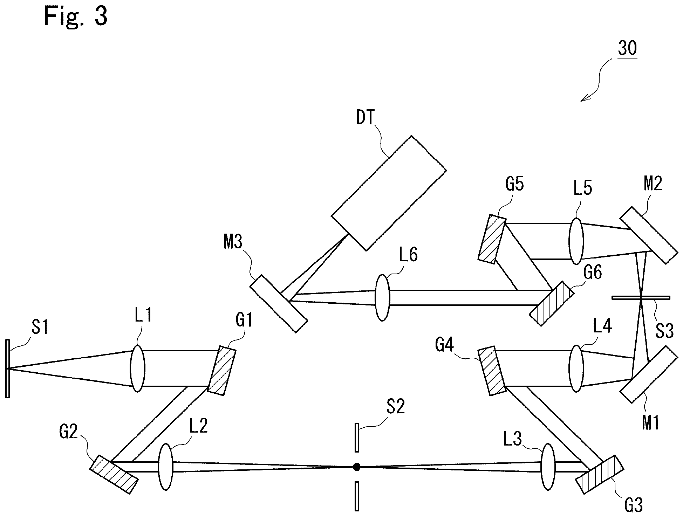

Fig. 3 is a configuration diagram illustrating an example of the spectrum measurement unit 30. The spectrum measurement unit 30 includes: a spectroscope including a plurality of diffraction gratings G1 to G5, a plurality of slits S1 to S3, a plurality of lenses L1 to L6, and a plurality of mirrors M1 to M3; and then a photodetector DT. The slit S1 functions as an incidence slit that allows plasma scattered light LP from the plasma PL to pass through. The light having passed through the slit S1 is collimated by the lens L1, and then diffracted by the diffraction gratings G1 and G2, and then condensed by the lens L2, and then enters the slit S2.

The slit S2 is configured as a so-called inverse slit, which includes a metal wire at the center of the slit. The metal wire has a function of blocking a zero-order diffracted light generated by the diffraction gratings G1 and G2. By matching the wavelength of the zero-order diffracted light with the wavelength of the laser light LA, only the plasma scattered light LP having wavelengths different from that of the laser light LA can be extracted.

The Light having passed through the slit S2 is collimated by the lens L3, and then diffracted by the diffraction gratings G3 and G4, and then condensed by the lens L4, and then reflected by the mirror M1, and then enters the slit S3. The light having passed through the slit S3 is reflected by the mirror M2, and then collimated by the lens L5, and then diffracted by the diffraction gratings G5 and G6, and then condensed by the lens L6, and then reflected by the mirror M3, and then enters the photodetector DT. The photodetector DT is configured with an imaging element, such as an intensified charge coupled device (ICCD) camera, to output a wavelength spectrum signal representing a spatial distribution corresponding to the light wavelength.

When such a spectroscope is adopted, it is possible to achieve the following spectral performance: the stray light removal performance in a wavelength region that is positioned away by 15 pm (picometer) or more is 10⁻⁵ or higher from the wavelength of the laser light LA, the signal transmittance of the spectroscope is 10% or more, and a light receiving solid angle for the scattered light is 5 mSr (millisteradian) or more.

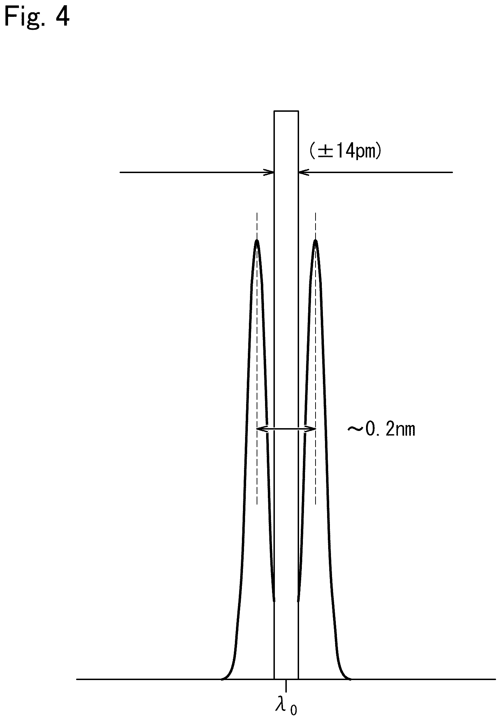

Fig. 4 is a graph showing an example of the wavelength spectrum signal of the photodetector DT. The wavelength spectrum of laser Thomson scattering is symmetrically distributed about the wavelength λ₀ of the laser light LA. In particular, in collective scattering, a double peak (λₒ-Δλ, λₒ+Δλ) appears in the plasma scattered light LP based on the ion term. A peak-to-peak distance (2×Δλ) can change in accordance with the electron temperature of the plasma. An area of the double peak can vary depending on the electron density of the plasma.

Fig. 4 illustrates a case where the peak-to-peak distance is about 0.2 nm, by way of example. By adopting the above-described inverse slit S2, it is possible to remove light within a ±14 pm (picometer) width centered on the wavelength λ₀. This makes it possible to greatly improve an S/N ratio of plasma scattered light.

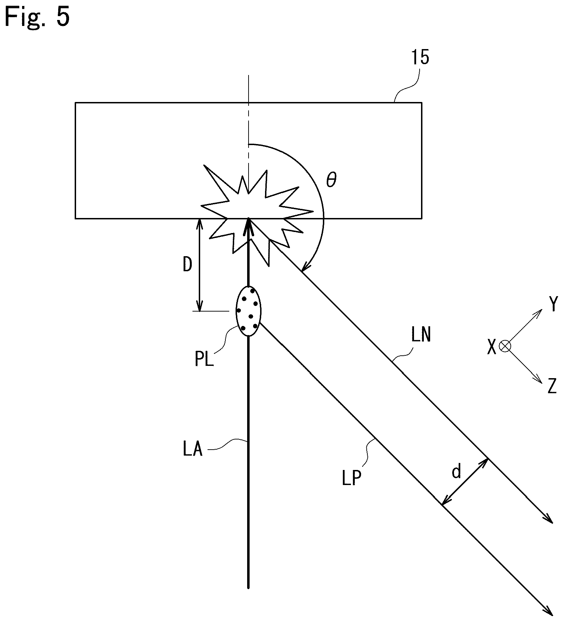

Fig. 5 shows a partially enlarged view of Fig. 2. The object 15 is provided behind the plasma PL. The laser light having passed through the plasma PL collides with the object 15, and a large amount of noise scattered light is generated. Consideration will be given to a case where the plasma scattered light LP traveling in the direction of an angle θ with reference to the optical axis of the laser light LA is measured. When the distance from the center of the plasma PL to the surface of the object 15 along the traveling direction of the laser light is assumed as D, an interval d between the plasma scattered light LP and noise scattered light LN traveling in the direction of the angle θ is expressed as d=D×cos(90°-θ).

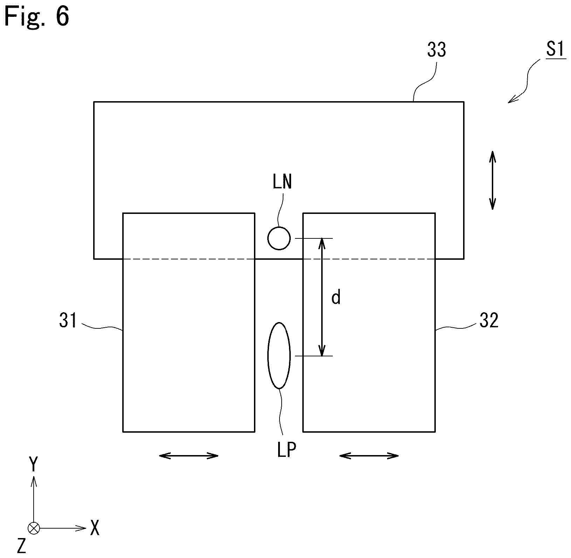

Fig. 6 is a layout diagram illustrating an example of the incidence slit S1 of the spectroscope. The incidence slit S1 includes two blades 31 and 32 movable in an X-direction in an XY-plane (parallel to the paper surface) perpendicular to a traveling direction of the plasma scattered light LP. Edges of the blades 31 and 32 can set a slit shape, and the slit shape is so adjusted that light flux of the plasma scattered light LP can pass therethrough and the light other than the plasma scattered light LP can be blocked as much as possible.

On the other hand, light flux of the noise scattered light LN is shifted in a YZ-plane by the interval d from the light flux of the plasma scattered light LP. Therefore, incidence of the noise scattered light LN cannot be blocked by the two blades 31 and 32.

To address this issue, the incidence slit S1 further includes a third blade 33 movable in the Y direction in the XY-plane. A position of the blade 33 can be adjusted so as to block the light flux of the noise scattered light LN. By adopting the incidence slit S1 having such three blades as described above, it is possible to efficiently prevent the noise scattered light generated from the object 15 from entering the spectroscope.

Note that when a lens having a magnification ratio M is interposed between the plasma PL and the incidence slit S1, the interval d in the incidence slit S1 is expressed by d=D×M×cos (90°-θ).

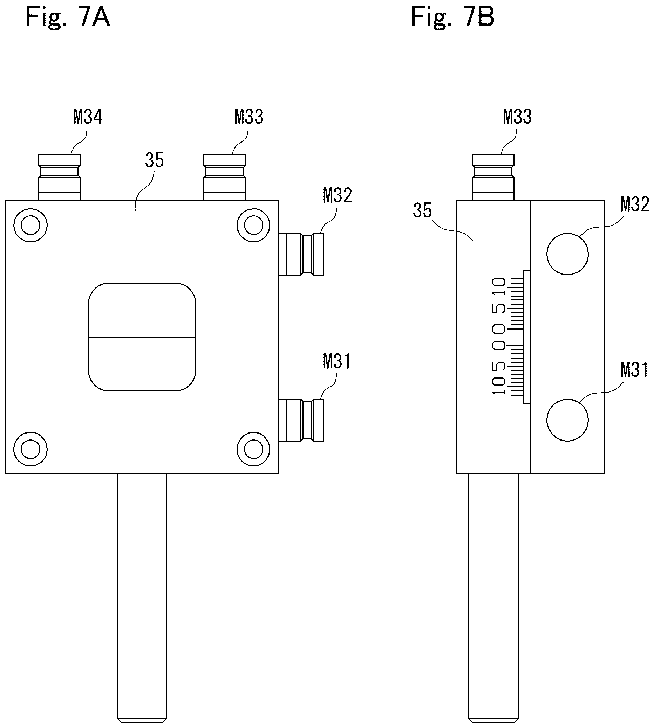

Fig. 7A is a front view illustrating a specific example of the slit S1, and Fig. 7B is a side view of the slit S1. Such a slit is commercially available as a variable slit (product SLX-1, manufactured by Sigma Koki Co., Ltd.). A slit body 35 has a rectangular parallelepiped shape having an opening at the center thereof, and includes one pair of blades movable left and right, and another pair of blades movable up and down, that is to say, includes four blades in total. The positions of the left and right blades can be adjusted by rotation of knobs M31 and M32, and the positions of the upper and lower blades can be adjusted by rotation of knobs M33 and M34, respectively.

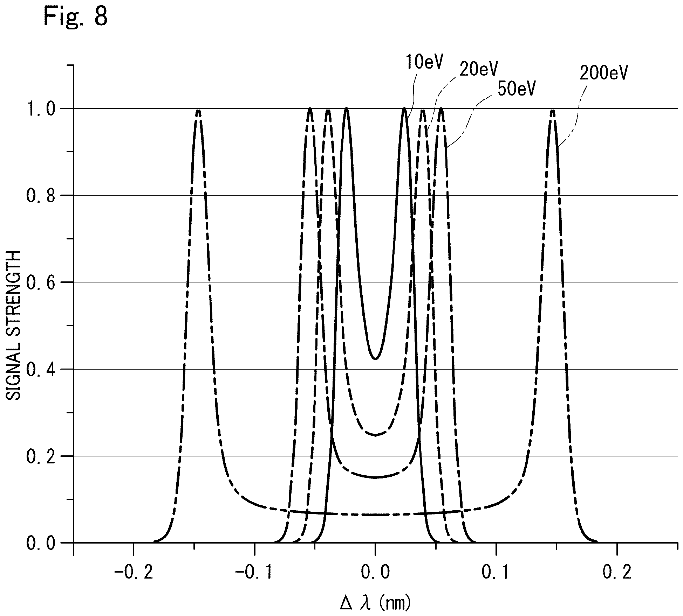

Fig. 8 is a graph showing an example of a wavelength spectrum of the plasma scattered light. The vertical axis represents signal strength (arbitrary unit, linear) of plasma scattered light, and the horizontal axis represents a shift amount from the center wavelength λ₀. It can be seen that as the electron temperature Tₑ of the plasma increases, the peak-to-peak distance also increases. For example, in the case of the electron temperature Tₑ=10 eV (about 100,000 K), peaks appear at λ₀±0.025 nm. In the case of Tₑ=50 eV (about 500,000 K), peaks appear at λ₀±0.055 nm. In the case of Tₑ=200 eV (about 2,000,000 K), the peaks appear at λ₀±0.15 nm.

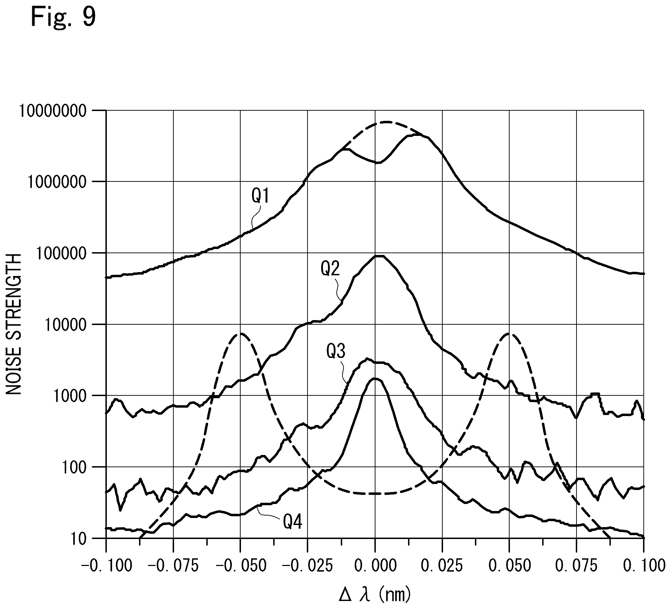

Fig. 9 is a graph showing results of actually measuring influence of the noise scattered light in the device of Fig. 2. The vertical axis represents signal strength (arbitrary unit, logarithmic) of the noise scattered light, and the horizontal axis represents a shift amount from the center wavelength λ₀. Experimental conditions for each measurement are θ=135° and magnification ration M=1. Note that the dashed line graph represents, for reference, plasma scattered light having a double peak in the case of Tₑ=50 eV.

The curved line Q1 represents a case where the distance D from the center of the plasma PL to the surface of the object 15 satisfies D=1 mm (d=0.7 mm) and only the left and right blades 31 and 32 are used. Note that the recess near the top of the curved line Q1 is caused by saturation of the measurement system, and the curved line Q1 has actually a Gaussian shape with a single peak. Since the object 15 is extremely close to the plasma PL, the signal intensity of the noise scattered light is the largest, and it can be seen that a large amount of noise scattered light LN enters the spectroscope from the object 15. As a result, the double peak of the plasma scattered light is concealed by the noise scattered light and cannot be measured.

The curved line Q2 represents a case of the distance D=1 mm (d=0.7 mm) and the left and right blades 31 and 32 and the upper blade 33 being used. The object 15 is extremely close to the plasma PL, but the upper blade 33 is used, thereby preventing the noise scattered light from entering the spectroscope. It can be thus seen that the noise scattered light is attenuated by about two orders of magnitude (about 20 dB) as compared with the curved line Q1. As a result, the double peak of the plasma scattered light is slightly larger than the noise scattered light. The peak-to-peak distance can therefore be measured, and for example, medium-density plasma (10²³ m⁻³) can be measured.

The curved line Q3 represents a case of the distance D=3 mm (d=2.1 mm) and the left and right blades 31 and 32 and the upper blade 33 being used. The object 15 is positioned away from the plasma PL to some extent, and the interval d is accordingly large; therefore, the upper blade 33 can block the noise scattered light more. It can be thus seen that the noise scattered light is attenuated by about 1.5 orders of magnitude (about 15 dB) as compared with the curved line Q2. As a result, the double peak of the plasma scattered light is considerably larger than the noise scattered light. The peak-to-peak distance can therefore be measured, and for example, low density plasma (10²² m⁻³) can be measured.

The curved line Q4 represents a case of the distance D=80 mm and only the left and right blades being used. Since the object 15 is considerably away from the plasma PL, the amount of noise scattered light entering the spectroscope from the object 15 is the smallest.

As described above, the present invention makes it possible to measure plasma having an electron density of 10²² to 10²⁶ m⁻³ and an electron temperature of 10 to 200 eV. However, when the electron density is too low, the plasma scattered light is too weak. When the electron density is too high, reflection by free electrons increases, and laser light cannot enter the inside of the plasma.

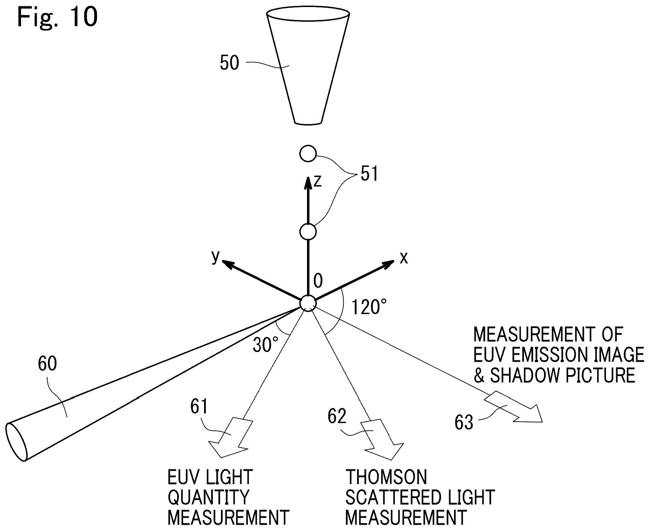

Next, LTS measurement of EUV light source plasma will be described below. Fig. 10 is a perspective view illustrating an example of a layout for LTS measurement. A droplet generator 50 continuously supplies an Sn (tin) target 51 downward (-z direction). Picosecond pre-laser light, CO₂ laser light, and the measuring laser light (second harmonic of YAG Laser, 532 nm) travel along a direction 60 that is coaxial with the x-axis. In the xy-plane, EUV light quantity measurement is performed in a direction 61 that is inclined at an angle of 150° with respect to the x-axis, and Thomson scattered light measurement is performed in a direction 62 that is inclined at an angle of 120° with respect to the x-axis, and measurement of EUV emission image and shadow picture is performed in a direction 63 that is inclined at an angle of 90° with respect to the x-axis.

The Sn target 51 is, for example, a droplet having a diameter of 26 µm. Picosecond pre-laser light is applied to the Sn target 51 to expand the Sn target 51 in a mist form, and a plurality of pulses of light (for example, the pulse width is about 20 ns) are subsequently applied from a CO₂ laser light source at three different timings, whereby the Sn target 51 generates EUV light.

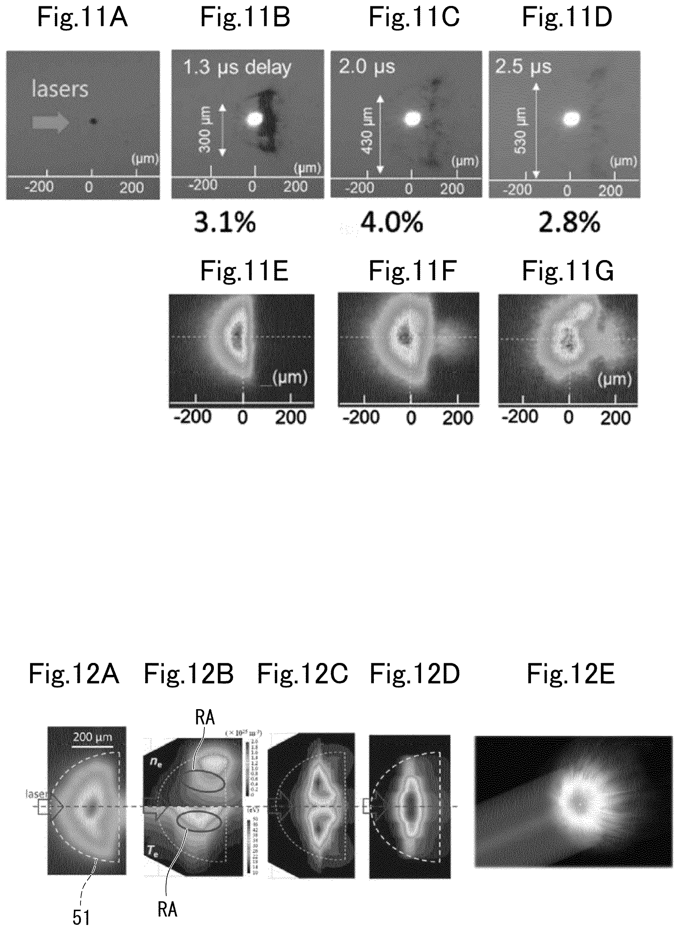

Figs. 11A to 11D each show a shadow graph of the Sn target. Fig. 11A shows a state before the application of the picosecond pulsed laser light, Fig. 11B shows a state where the CO₂ laser light is applied with a delay time of Δt=1.3 µs (second) after the application of the picosecond pulsed laser light, Fig. 11C shows a state where the CO₂ laser light is applied with a delay time of Δt=2.0 µs after the application of the picosecond pulsed laser light, and Fig. 11D shows a state where CO₂ laser light is applied with a delay time of Δt=2.5 µs after the application of the picosecond pulsed laser light.

Figs. 11E to 11G each show an EUV (13.5 nm ±1% width) emission distributions. Fig. 11E corresponds to Fig. 11B, Fig. 11F corresponds to Fig. 11C, and Fig. 11G corresponds to Fig. 11D. EUV conversion efficiencies η can be calculated from Figs. 11E to 11G, resulting in η=3.1 %, 4.0 %, and 2.8 %, respectively. Therefore, it is found that, when Δt=2.0 µs, the efficiency is the highest and the conversion efficiency η reaches 4%.

Fig. 12A shows an EUV emission distribution corresponding to Fig. 11E. The dashed line in the drawing represents an outer shape of the Sn target. Fig. 12B shows distributions of the electron density nₑ (upper graph) and the electron temperature Tₑ (lower graph) obtained by LTS measurement. The solid line represents an optimum region (30 to 40 eV). Fig. 12C shows an emissivity distribution calculated based on the electron density nₑ and the electron temperature Tₑ in Fig. 12B. Fig. 12D is a graph obtained by reconstructing the graph of Fig. 12C.

Fig. 12E is a graph showing a state of EUV emission. It has been found that the plasma (EUV light source) heated by the laser light applied from the left to the right in the drawing has a flow gathering toward the center, and the EUV light is efficiently emitted particularly from the bright region in the drawing.

As described above, the electron density and the electron temperature of EUV light can be measured using the LTS measurement, and the conditions for the EUV emission efficiency can be optimized using these parameters. Therefore, such a method makes it possible to improve the design efficiency and productivity of the EUV light source and maximize the EUV light source output. As a result, the present invention can greatly contribute to the mass production technology of next-generation semiconductors having a line width of 3 nm or less.

### INDUSTRIAL APPLICABILITY

### (INDUSTRIAL APPLICABILITY)

The present invention is industrially very useful in that the present invention makes it possible to relax the structural constraints for plasma measurement and, at the same time, to perform measurement with higher accuracy.

### REFERENCE SIGNS LIST

10 VACUUM CHAMBER, 11-13 WINDOW, 15 OBJECT,
20 LASER LIGHT SOURCE, 30 SPECTRUM MEASUREMENT UNIT,
31, 32, 33 BLADE, 40 ARITHMETIC UNIT, LA LASER LIGHT,
PL PLASMA, LP PLASMA SCATTERED LIGHT,
LN NOISE SCATTERED LIGHT, S1-S3 SLIT,
G1-G5 DIFFRACTION GRATING

## Claims

1. A plasma measurement device comprising:
a laser light source configured to apply laser light to plasma; and
a spectrum measurement unit configured to receive scattered light from the plasma and measure a wavelength spectrum of the scattered light; and
an arithmetic unit configured to calculate an electron temperature and an electron density of the plasma, based on the measured wavelength spectrum,
wherein the spectrum measurement unit includes a spectroscope having an incidence slit,
the incidence slit including: two blades movable in a first direction in a plane perpendicular to a traveling direction of the scattered light; and at least one blade movable in a second direction perpendicular to the first direction, edges of at least three of the blades forming a slit shape.

2. The plasma measurement device according to claim 1, wherein the slit shape of the incidence slit part is set such that the first scattered light coming from an object installed at the predetermined distance along a traveling direction of the laser light from the center of the plasma is prevented from entering the spectroscope and the second scattered light directly coming from the plasma is allowed to enter the spectroscope.

3. The plasma measurement device according to claim 1, wherein the spectroscope includes a plurality of diffraction gratings and a plurality of slits, and at least one of the plurality of slits is made of an inverse slit configured to block zero-order diffracted light.

4. The plasma measurement device according to claim 1, wherein the plasma to be measured has an electron density of 10²² to 10²⁶ m⁻³ and an electron temperature of 10 to 200 eV.

5. The plasma measurement device according to claim 2, wherein a distance from a center of the plasma to the object is 1 to 3 mm.
